# EUROPEAN PATENT SPECIFICATION

(11) **EP 3 550 739 B1**
(45) Date of publication and mention of the grant of the patent: **30.06.2021**
(21) Application number: 16924638.6
(22) Date of filing: 24.12.2016
(51) Int. Cl.: H04B 10/27, H04L 12/24, H04Q 11/00

(54) **DATA COMMUNICATION SYSTEM, OPTICAL LINE TERMINAL, AND BASEBAND UNIT**
DATENKOMMUNIKATIONSSYSTEM, OPTISCHER LEITUNGSANSCHLUSS UND BASISBANDEINHEIT
SYSTÈME DE COMMUNICATION DE DONNÉES, TERMINAL DE LIGNE OPTIQUE ET UNITÉ DE BANDE DE BASE

(43) Date of publication of application: 09.10.2019
(73) Proprietor: Huawei Technologies Co., Ltd., Longgang District Shenzhen, Guangdong 518129 (CN)
(72) Inventor: YIN, Jinrong, Shenzhen Guangdong 518129 (CN); ZHAO, Dianbo, Shenzhen Guangdong 518129 (CN); ZHENG, Gang, Shenzhen Guangdong 518129 (CN)
(74) Representative: Gill Jennings & Every LLP
(86) International application number: PCT/CN2016/111931
(87) International publication number: WO 2018/112981

(56) References cited:
- WO-A2-2015/040484
- CN-A- 102 263 726
- CN-A- 104 782 084
- CN-A- 105 491 466
- JP-A- 2014 112 797
- JP-A- 2016 146 584

## Description

### TECHNICAL FIELD

This application relates to the optical communications field, and in particular, to a data communications system, an optical line terminal (Optical Line Terminal, OLT), and a baseband unit (Baseband Unit, BBU).

### BACKGROUND

A passive optical network (Passive Optical Network, PON) has a point-to-multipoint network topology structure, and usually includes an optical line terminal (Optical Line Terminal, OLT) located at a central office, a plurality of optical network units (Optical Network Unit, ONU) located on a user side, and an optical distribution network (Optical Distribution Network, ODN) located between the optical line terminal and the plurality of optical network units.

In a PON system, a newly-added ONU can send upstream service data to an OLT through an upstream channel only after being registered at the OLT. In an Ethernet passive optical network (Ethernet Passive Optical Network, EPON) system, an OLT receives, by opening a silent window, a registration response packet sent by a newly-added ONU through an upstream channel, to allocate a logical link identifier (Logical Link Identifier, LLID) to the newly-added ONU based on a Media Access Control (Media Access Control, MAC) address carried in the registration response packet; and performs ranging on the newly-added ONU, to register the newly-added ONU in the EPON system. In a gigabit-capable passive optical network (Gigabit-Capable Passive Optical Network, GPON) system, an OLT receives, by opening a silent window, a registration response packet sent by a newly-added ONU, to allocate an ONU ID based on a serial number (Serial Number, SNR) carried in the registration response packet; and further completes ranging on the newly-added ONU, to register the newly-added ONU in the GPON system.

After registration is completed, the registered ONU sends the upstream service data to the OLT through the upstream channel in a Time Division Multiple Access (Time Division Multiple Access, TDMA) manner based on an upstream transmission timeslot allocated by the OLT, to prevent upstream service data sent by different ONUs from conflicting with each other on the upstream channel. In addition, during registration of a newly-added ONU, the OLT stops granting bandwidth to the registered ONU, to be specific, the registered ONU stops sending the upstream service data, to avoid a conflict between a registration response packet and the upstream service data on the upstream channel.

In the PON system, a relatively large delay exists during sending of upstream service data because a registered ONU can send the upstream service data only after a silent window ends, and consequently a system delay requirement of a delay-sensitive service cannot be met. For example, in a scenario in which the PON system is applied to a mobile bearer system, an interface between a baseband unit (Baseband Unit, BBU) and a remote radio unit (Remote Radio Unit, RRU) requires a delay less than 100 µs. Because an OLT in the PON system completes registration of a newly-added ONU, a silent window is opened once usually for 200 µs to 250 µs. In this case, all registered ONUs can perform normal data communication only after waiting for 200 µs to 250 µs. Consequently, a delay in the scenario of the mobile bearer system cannot meet a performance requirement of a 100 µs delay required for service transmission.

JP 2014 112797 A describes an optical subscriber communication system. JP 2016 146584 A describes a station side optical line termination device.

### SUMMARY

In accordance with the invention, there are methods, devices and a data communications system as set forth in the claims. To resolve a problem that a relatively large delay exists during sending of upstream service data because a registered ONU can send the upstream service data only after a silent window ends, and consequently a system delay requirement of a delay-sensitive service cannot be met, technical solutions are as follows:

In a first design solution, a registration method is provided, and is applied to a mobile bearer system. The method includes:
sending, by an optical line terminal OLT, an optical network unit ONU registration request message to a baseband unit BBU; and
starting, by the OLT, the ONU registration after receiving a response message from the BBU.

In a possible design, the registration request includes a size of a silent window required for the ONU registration.

In a possible design, the response message of the BBU includes an ONU registration response identifier determined by the BBU.

In a possible design, the method further includes:
sending, by the OLT, an ONU registration complete message to the BBU.

In this design solution, the OLT sends the ONU registration request message to the baseband unit BBU, the BBU temporarily stops, after receiving the ONU registration request message, allocating a bandwidth resource to user equipment device, and the OLT starts the ONU registration after receiving the response message from the BBU, to ensure that during the ONU registration, the UE temporarily stops an upstream service, and no upstream data arrives at an RRU and an ONU. Therefore, a case in which data cannot be sent to the BBU in a timely manner due to the ONU registration and a delay exceeds a delay requirement of an interface between the BBU and the RRU is avoided, and accordingly a problem that the ONU registration affects a delay-sensitive service is resolved, so that a service transmission requirement can still be met when a PON system is applied to the mobile bearer system, and user satisfaction is improved.

In a second design solution, another registration method is provided, and is applied to a network side device in a mobile bearer system. The network side device includes a baseband unit BBU and an optical line terminal OLT connected to the BBU. The method includes: receiving, by the BBU, a registration request message sent by the OLT; and temporarily stopping, by the BBU based on the registration request message, allocating a bandwidth resource to user equipment device.

Based on the design solution, in a possible design, the registration request message includes a size of a silent window required for ONU registration.

Based on the design solution, in another possible design, the method further includes:
determining, by the BBU, an ONU registration start time based on the size of the silent window required for the ONU registration; and sending the determined ONU registration start time to the OLT.

Based on the design solution, in a possible design, the method further includes:
sending, by the BBU to the OLT, an ONU registration response identifier determined by the BBU, where the ONU registration response identifier is used to identify whether the OLT can perform the ONU registration after the OLT receives an ONU registration response message.

In this design solution, the OLT sends the ONU registration request message to the baseband unit BBU, the BBU temporarily stops, after receiving the ONU registration request message, allocating the bandwidth resource to the user equipment device, and the OLT starts the ONU registration after receiving the response message from the BBU, to ensure that during the ONU registration, the UE temporarily stops an upstream service, and no upstream data arrives at an RRU and an ONU. Therefore, a case in which data cannot be sent to the BBU in a timely manner due to the ONU registration and a delay exceeds a delay requirement of an interface between the BBU and the RRU is avoided, and accordingly a problem that the ONU registration affects a delay-sensitive service is resolved, so that a service transmission requirement can still be met when a PON system is applied to the mobile bearer system, and user satisfaction is improved.

In a third design solution, a registration method is provided, and is applied to a mobile bearer system. The method includes:
receiving, by an optical line terminal OLT, subframe configuration information sent by a baseband unit BBU; calculating, by the OLT based on the received subframe configuration information, a timeslot used for optical network unit ONU registration; and starting, by the OLT, the ONU registration based on the calculated timeslot.

Based on the third design solution, the calculating, by the OLT based on the received subframe configuration information, a timeslot used for ONU registration specifically includes:
calculating, by the OLT, a timeslot that is corresponding to configuration information of a downlink subframe and that is in the subframe configuration information; and
selecting, by the OLT, the calculated timeslot as the timeslot used for the ONU registration.

Based on the third design solution, the OLT calculates, based on the received subframe configuration information and a monitored downstream and/or upstream data distribution status by using the subframe configuration information provided by the baseband unit BBU, the timeslot used for the optical network unit ONU registration, to perform the ONU registration by using a transmission timeslot that is of the downlink subframe and that is in the subframe configuration information of the BBU while avoiding impact of the ONU registration on a delay-sensitive service, so that a transmission rate of upstream service data is improved, and a problem that a relatively large delay exists during sending of upstream service data because a registered ONU can send the upstream service data only after a silent window ends, and consequently a system delay requirement of the delay-sensitive service cannot be met is resolved.

In a fourth design solution, a registration method is provided, and is applied to a network side device in a mobile bearer system. The network side device includes a cloud controller, a baseband unit BBU, and an optical line terminal OLT connected to the BBU. The method includes:
determining, by the cloud controller, an ONU registration start time; and instructing, by the cloud controller based on the ONU registration start time, the BBU to temporarily stop allocating a bandwidth resource to user equipment device.

Based on the fourth design solution, in a possible design,
the determining, by the cloud controller, an ONU registration start time specifically includes:
receiving, by the cloud controller, an instruction for starting ONU registration, where the instruction for starting the ONU registration includes an ONU registration period and a size of a silent window required for the ONU registration; and determining the ONU registration start time based on the ONU registration period and the size of the silent window required for the ONU registration that are in the ONU registration instruction.

In this design solution, the cloud controller centrally allocates and schedules resources of the OLT and the BBU, to improve a transmission rate of upstream service data while avoiding impact of the ONU registration on a delay-sensitive service, so that a problem that a relatively large delay exists during sending of upstream service data because a registered ONU can send the upstream service data only after a silent window ends, and consequently a system delay requirement of the delay-sensitive service cannot be met is resolved.

In a fifth design solution, a network side device is provided. The network side device includes:
a transceiver, configured to: send an optical network unit ONU registration request message to a baseband unit BBU, and receive a response message from the BBU; and
a processor, configured to start the ONU registration after the transceiver receives the response message from the BBU.

In this design solution, an OLT sends the ONU registration request message to the baseband unit BBU, the BBU temporarily stops, after receiving the ONU registration request message, allocating a bandwidth resource to user equipment device, and the OLT starts the ONU registration after receiving the response message from the BBU, to ensure that during the ONU registration, the UE temporarily stops an upstream service, and no upstream data arrives at an RRU and an ONU. Therefore, a case in which data cannot be sent to the BBU in a timely manner due to the ONU registration and a delay exceeds a delay requirement of an interface between the BBU and the RRU is avoided, and accordingly a problem that the ONU registration affects a delay-sensitive service is resolved, so that a service transmission requirement can still be met when a PON system is applied to a mobile bearer system, and user satisfaction is improved.

Based on the fifth design solution, in a possible design solution,
the registration request includes a size of a silent window required for the ONU registration.

Based on the fifth design solution, in another possible design solution,
the response message of the BBU includes an ONU registration response identifier determined by the BBU.

Based on the fifth design solution, in another possible design solution,
the transceiver is further configured to send an ONU registration complete message to the BBU.

In a sixth design solution, a network side device is provided. The network side device includes:
a transceiver, configured to receive a registration request message sent by the OLT; and
a controller, configured to temporarily stop, based on the registration request message, allocating a bandwidth resource to user equipment device.

In this design solution, the OLT sends the ONU registration request message to a baseband unit BBU, the BBU temporarily stops, after receiving the ONU registration request message, allocating the bandwidth resource to the user equipment device, and the OLT starts the ONU registration after receiving a response message from the BBU, to ensure that during the ONU registration, the UE temporarily stops an upstream service, and no upstream data arrives at an RRU and an ONU. Therefore, a case in which data cannot be sent to the BBU in a timely manner due to the ONU registration and a delay exceeds a delay requirement of an interface between the BBU and the RRU is avoided, and accordingly a problem that the ONU registration affects a delay-sensitive service is resolved, so that a service transmission requirement can still be met when a PON system is applied to a mobile bearer system, and user satisfaction is improved.

Based on the sixth design solution, in a possible design solution,
the registration request message includes a size of a silent window required for ONU registration.

Based on the sixth design solution, in another possible design solution,
the controller is further configured to determine an ONU registration start time based on the size of the silent window required for the ONU registration; and
the transceiver is further configured to send the determined ONU registration start time to the OLT.

Based on the sixth design solution, in another possible design solution,
the transceiver is further configured to send, to the OLT, an ONU registration response identifier determined by a BBU, where the ONU registration response identifier is used to identify whether the OLT can perform ONU registration after the OLT receives an ONU registration response message.

In a seventh design solution, a network side device is provided. The network side device includes:
a transceiver, configured to receive subframe configuration information sent by a baseband unit BBU; and
a controller, configured to: calculate, based on the received subframe configuration information, a timeslot used for optical network unit ONU registration, and start the ONU registration based on the calculated timeslot.

Based on the seventh design solution, an OLT calculates, based on the received subframe configuration information and a monitored downstream and/or upstream data distribution status by using the subframe configuration information provided by the baseband unit BBU, the timeslot used for the optical network unit ONU registration, to perform the ONU registration by using a transmission timeslot that is of a downlink subframe and that is in the subframe configuration information of the BBU while avoiding impact of the ONU registration on a delay-sensitive service, so that a transmission rate of upstream service data is improved, and a problem that a relatively large delay exists during sending of upstream service data because a registered ONU can send the upstream service data only after a silent window ends, and consequently a system delay requirement of the delay-sensitive service cannot be met is resolved.

Based on the seventh design solution, in a possible design,
the controller is specifically configured to: calculate a timeslot that is corresponding to configuration information of a downlink subframe and that is in the subframe configuration information, and select the calculated timeslot as the timeslot used for the ONU registration.

In an eighth design solution, a network side device is provided. The network side device includes:
a calculation unit, configured to determine an ONU registration start time;
   and
a processing unit, configured to temporarily stop, based on the ONU registration start time, allocating a bandwidth resource to user equipment device.

In this design solution, the network side device centrally allocates and schedules resources of an OLT and a BBU, to improve a transmission rate of upstream service data while avoiding impact of ONU registration on a delay-sensitive service, so that a problem that a relatively large delay exists during sending of upstream service data because a registered ONU can send the upstream service data only after a silent window ends, and consequently a system delay requirement of the delay-sensitive service cannot be met is resolved.

Based on the eighth design solution, in a possible design,
the calculation unit is specifically configured to: receive an instruction for starting ONU registration, where the instruction for starting the ONU registration includes an ONU registration period and a size of a silent window required for the ONU registration; and determine the ONU registration start time based on the ONU registration period and the size of the silent window required for the ONU registration that are in the ONU registration instruction.

In a ninth design solution, a data communications system is provided. The system includes a baseband unit BBU, a remote radio unit RRU, an optical line terminal OLT connected to the BBU, and an optical network unit ONU connected to the RRU. The OLT is connected to each ONU by using an optical distribution network ODN. The OLT includes the network side device described in the fifth design solution, and the BBU includes the network side device described in the sixth design solution; or the OLT includes the network side device described in the seventh design solution, and the BBU includes the network side device described in the eighth design solution.

In this design solution, the OLT sends an ONU registration request message to the baseband unit BBU, the BBU temporarily stops, after receiving the ONU registration request message, allocating a bandwidth resource to user equipment device, and the OLT starts the ONU registration after receiving a response message from the BBU, to ensure that during the ONU registration, the UE temporarily stops an upstream service, and no upstream data arrives at the RRU and the ONU. Therefore, a case in which data cannot be sent to the BBU in a timely manner due to the ONU registration and a delay exceeds a delay requirement of an interface between the BBU and the RRU is avoided, and accordingly a problem that the ONU registration affects a delay-sensitive service is resolved, so that a service transmission requirement can still be met when a PON system is applied to a mobile bearer system, and user satisfaction is improved.

In a tenth design solution, a data communications system is provided. The system includes a cloud controller, a baseband unit BBU, a remote radio unit RRU, an optical line terminal OLT connected to the BBU, and an optical network unit ONU connected to the RRU. The OLT is connected to each ONU by using an optical distribution network ODN.

The cloud controller is configured to: determine an ONU registration start time, and instruct, based on the ONU registration start time, the BBU to temporarily stop allocating a bandwidth resource to user equipment device.

The BBU is configured to temporarily stop, based on an instruction of the cloud controller, allocating the bandwidth resource to the user equipment device.

In this design solution, the cloud controller centrally allocates and schedules resources of the OLT and the BBU, to improve a transmission rate of upstream service data while avoiding impact of ONU registration on a delay-sensitive service, so that a problem that a relatively large delay exists during sending of upstream service data because a registered ONU can send the upstream service data only after a silent window ends, and consequently a system delay requirement of the delay-sensitive service cannot be met is resolved.

### BRIEF DESCRIPTION OF DRAWINGS

FIG. 1 is a diagram of a system architecture of a data communications system according to an embodiment of this application;
FIG. 1a is a diagram of a system architecture of a data communications system according to another embodiment of this application;
FIG. 2 is a schematic flowchart of a registration method according to a first embodiment of this application;
FIG. 3 is a schematic flowchart of a registration method according to a second embodiment of this application;
FIG. 4 is a schematic flowchart of a registration method according to a third embodiment of this application;
FIG. 5 is a schematic flowchart of a registration method according to a fourth embodiment of this application;
FIG. 6 is a schematic flowchart of a registration method according to a fifth embodiment of this application;
FIG. 7 is a schematic flowchart of a registration method according to a sixth embodiment of this application;
FIG. 8 is a schematic structural diagram of a first network side device according to an embodiment of this application;
FIG. 9 is a schematic structural diagram of a second network side device according to an embodiment of this application;
FIG. 10 is a schematic structural diagram of a third network side device according to an embodiment of this application;
FIG. 11 is a schematic structural diagram of a fourth network side device according to an embodiment of this application; and
FIG. 12 is a schematic structural diagram of a fifth network side device according to an embodiment of this application.

### DESCRIPTION OF EMBODIMENTS

To make the objectives, technical solutions, and advantages of this application clearer, the following further describes the implementations of this application in detail with reference to the accompanying drawings.

"A plurality of' mentioned in this specification means two or more. The term "and/or" describes an association relationship for describing associated objects and represents that three relationships may exist. For example, A and/or B may represent the following three cases: Only A exists, both A and B exist, and only B exists. The character "/" generally indicates an "or" relationship between the associated objects.

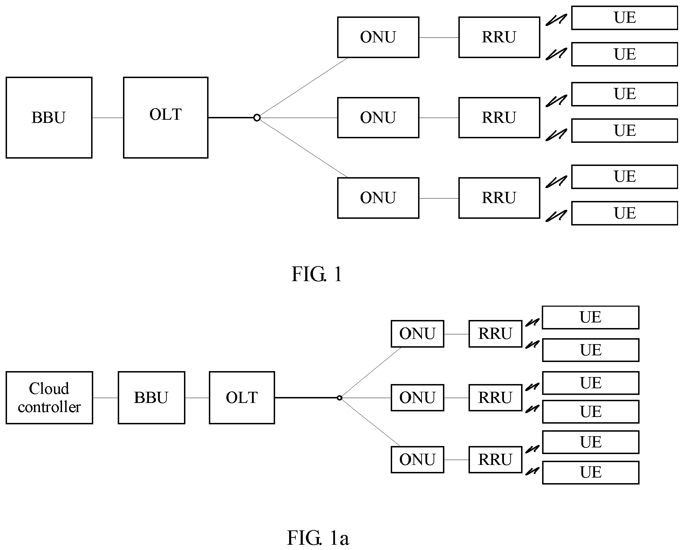

FIG. 1 is a diagram of a system architecture of a data communications system according to an embodiment of this application. The data communications system includes a baseband unit (Baseband Unit, BBU), an optical line terminal (Optical Line Terminal, OLT), an optical network unit (Optical Network Unit, ONU), a remote radio unit (Remote Radio Unit, RRU), and user equipment device. A passive optical network (Passive Optical Network, PON) system includes an OLT and an ONU. The OLT is a central office device in the system, for example, is located at a central office (Central Office, CO), and provides functions such as ONU registration, bandwidth allocation, and downstream data sending. The ONU is a device located on a terminal side. All ONUs mentioned below can be applied to an optical network terminal (Optical Network Terminal, ONT). The OLT is connected to each ONU by using an optical distribution network (Optical Distribution Network, ODN). The OLT is connected to the ODN by using a feeder fiber, and the ODN is connected to each ONU by using a distribution fiber.

The mobile bearer system includes a base station and user equipment device. FIG. 1 shows a system architecture formed in a scenario in which the PON system is applied to the mobile bearer. The base station includes the BBU and the RRU. The BBU is centrally deployed in an equipment room, but the RRU still remains in a housing of a utility pole or a roof. After the BBU is centrally deployed, an interface between the BBU and the RRU includes a common public radio interface (Common Public Radio Interface, CPRI), an open base station architecture initiative (Open Base Station Architecture Initiative, OBASI), and the like. The CPRI is a mainstream interface used by the base station. With development of technologies, use of a next-generation fronthaul interface (Next-Generation Fronthaul Interface, NGFI) between the BBU and the RRU is currently being explored in the industry to re-divide the interface between the BBU and the RRU, so that the interface between the BBU and the RRU becomes an Ethernet interface while bandwidth between the BBU and the RRU is reduced, and statistical multiplexing can be supported. In this way, the bandwidth is independent of a quantity of antennas and a quantity of carriers, but depends on actual service traffic of the user equipment UE.

As shown in FIG. 1, a device located on a network side includes the BBU and the OLT. The OLT is connected to the BBU. A device located on a user side includes the ONU, the RRU, and the UE. The ONU is connected to the RRU, the UE wirelessly accesses the RRU, and the OLT is connected to each ONU by using the optical distribution network.

It should be noted that the PON system shown in FIG. 1 may be an EPON system or a GPON system; or may be a 10G EPON system or a 100G EPON system; or may be an XG-PON system, an XGS-PON system, or a TWDM-PON system. This is not limited in this embodiment of this application.

Various registration methods described below are applicable to the foregoing system in FIG. 1.

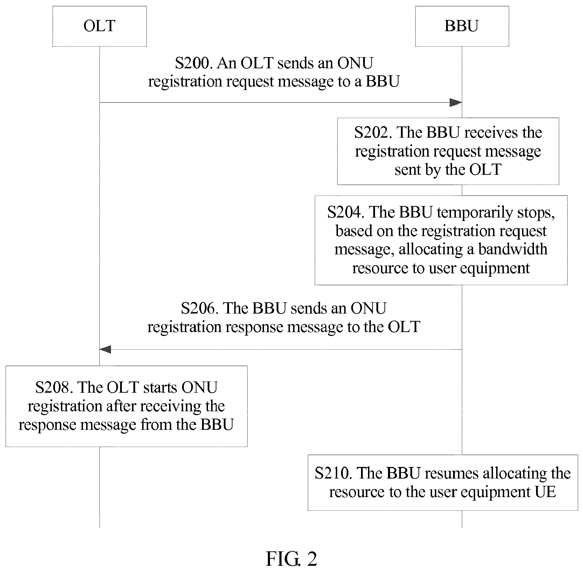

FIG. 2 shows a registration method applied to a mobile bearer system, and shows an embodiment of this application applied to the foregoing system architecture in FIG. 1. The mobile bearer system is the data communications system shown in FIG. 1. Both a structure and a connection relationship of the mobile bearer system are shown in FIG. 1.

The method includes the following steps.

S200. An OLT sends an ONU registration request message to a BBU.

Specifically, when the OLT needs to open a silent window for ONU registration, the OLT sends the ONU registration request message to the BBU.

The ONU registration request message is a message used for the ONU registration. If a system between the BBU and an RRU is a GPON system, the ONU registration request message may be a message for requesting ONU activation. If a system between the BBU and an RRU is an EPON system, the ONU registration request message may be a message for requesting ONU discovery.

A message format of the ONU registration request message may be a message format recorded in a standard in various PON systems such as a GPON system or an EPON system, for example, an operation, administration, and maintenance (Operation, Administration, and Maintenance, OAM) message, a physical layer operation, administration, and maintenance (Physical Layer OAM, PLOAM) message, or an optical network terminal management and control interface (optical network terminal management and control interface, OMCI) message; or may be various message formats specified in a standard in a mobile bearer system in the wireless field; or may be another customized message format. The message format used herein is not limited. In addition, these message formats can also be applied to the following various embodiments.

Optionally, the registration request message may be any one of the foregoing various messages, and message content may include a size of the silent window required for the ONU registration.

The message content may further include one or more of the following: an OLT identifier, a BBU identifier, a message type, and an ONU registration period. The ONU registration period may be in a unit of a second or a minute. For example, the ONU registration period is 10 seconds if the OLT performs ONU registration every 10 seconds.

The size of the silent window required for the ONU registration may be determined based on a length of an optical fiber between the OLT and an ONU. For example, when a maximum length of optical fiber between the OLT and the ONU is 20 km, the size of the silent window required for the ONU registration is usually 250 microseconds.

S202. The BBU receives the registration request message sent by the OLT.

S204. The BBU temporarily stops, based on the registration request message, allocating a bandwidth resource to user equipment device.

Specifically, after receiving the ONU registration request sent by the OLT, the BBU adjusts a resource allocation mechanism. When the ONU registration starts, the BBU temporarily stops allocating the resource to the UE, to be specific, temporarily stops an upstream service of the UE.

Optionally, after receiving the ONU registration request sent by the OLT, the BBU may immediately modulate resource allocation, to temporarily stop allocating the resource to the UE, to be specific, temporarily stop an upstream service of the UE; or may adjust resource allocation after a delay of a time period, to temporarily stop allocating the resource to the UE, to be specific, temporarily stop an upstream service of the UE.

Optionally, after receiving the ONU registration request sent by the OLT, the BBU may evaluate a current service status. If there is no emergency service currently, the BBU may adjust resource allocation, to temporarily stop allocating the resource to the UE, to be specific, temporarily stop an upstream service of the UE. If there is an emergency service currently, the BBU may continue to allocate the resource to the UE, reject the ONU registration request from the OLT, and generate an ONU registration response message for rejecting the ONU registration.

Optionally, the BBU determines an ONU registration start time based on the ONU registration period and the size of the silent window required for the ONU registration that are in the registration request, and the BBU sends, to the OLT, the determined ONU registration start time, the ONU registration period, and the size of the silent window required for the ONU registration.

S206. The BBU sends an ONU registration response message to the OLT.

A message format of the ONU registration response message may be a message format recorded in a standard in various PON systems such as a GPON or an EPON, for example, an operation, administration, and maintenance (Operation, Administration, and Maintenance, OAM) message, a physical layer operation, administration, and maintenance (Physical Layer OAM, PLOAM) message, or an optical network terminal management and control interface (optical network terminal management and control interface, OMCI) message; or may be various message formats specified in a standard in a mobile bearer system in the wireless field; or may be another customized message format. The message format used herein is not limited. In addition, these message formats can also be applied to the following various embodiments.

Optionally, the ONU registration response message may be any one of the foregoing various messages, and message content includes an ONU registration response identifier and/or an ONU registration start time.

Specifically, the BBU determines, based on the size of the silent window required for the ONU registration and the current service status, whether to allow the OLT to perform the ONU registration, and generates the ONU registration response identifier. The ONU registration response identifier may be used to identify whether the OLT can perform the ONU registration after the OLT receives the ONU registration response message. Further, the BBU determines the ONU registration start time based on the size of the silent window required for the ONU registration and the current service status.

The ONU registration response message may further include one or more of the following: a BBU identifier, an OLT identifier, a message type, an ONU registration period, and a size of a silent window required for ONU registration.

Optionally, sequences of step S204 and step S206 may be interchanged. To be specific, the BBU first sends the ONU registration response message to the OLT; and then temporarily stops, based on the ONU registration request message and the ONU registration response message when the ONU registration starts, allocating the bandwidth resource to the user equipment device.

S208. The OLT starts the ONU registration after receiving the response message from the BBU.

The OLT and the ONU use a TDM-PON working mechanism. The OLT opens a silent window when the OLT performs the ONU registration. The silent window is used by the OLT to register a newly-accessed ONU, so that a new ONU with an unknown distance is discovered and registered in a PON system smoothly without affecting sending of upstream data of another ONU. Within the silent window, all online ONUs need to stop sending upstream data. If not all online ONUs stop sending upstream data, a registration response packet sent by the new ONU to the OLT may conflict with an upstream sending packet of the online ONU. For details about how to specify the silent window, refer to the GPON series standard and/or the EPON series standard. This is not limited in this embodiment of this application.

An ONU registration process includes: obtaining user information of the ONU, allocating an identifier to the ONU, and measuring an RTT. The process is specifically as follows: The OLT receives the ONU registration request message, and obtains the user information of the ONU. For example, in a GPON system, the OLT obtains a serial number (Serial Number, SNR) of the ONU. In an EPON system, the OLT obtains a Media Access Control (Media Access Control, MAC) address of the ONU, and allocates the identifier to the ONU. The identifier of the ONU includes an ONU identifier (Identifier, ID) or a logical link identifier (Logical Link Identifier, LLID). Specifically, in a gigabit-capable passive optical network (Gigabit-Capable Passive Optical Network, GPON) system, the OLT receives, by opening the silent window required for the ONU registration, a registration request packet sent by a newly-added ONU device, to allocate an ONU ID based on a serial number (Serial Number, SNR) carried in the registration request packet; and further completes ranging on the newly-added ONU device. In an Ethernet passive optical network (Ethernet Passive Optical Network, EPON) system, the OLT device receives, by opening the silent window, a registration request packet sent by a newly-added ONU device, to allocate an LLID to the newly-added ONU device based on a Media Access Control (Media Access Control, MAC) address that is carried in a registration response packet and that is specified in the EPON standard; obtains a round trip time (Round Trip Time, RTT) between each ONU and the OLT through calculation and ranging; and may set, based on a specified farthest ONU distance, a pre-equalization delay of sending upstream data by each ONU, so that logical distances of user terminal devices are the same. Therefore, upstream burst data of the user terminals arrives at the OLT in order without conflicting with each other.

After the ONU registration is completed, when the OLT centrally schedules upstream sending of all ONUs by using a dynamic bandwidth allocation (Dynamic Bandwidth Allocation, DBA) technology, each user terminal sends data to the OLT within a specified timeslot according to a grant of a central office, to effectively resolve a conflict in a data burst in an upstream direction from the ONU to the OLT.

For a more detailed process of the ONU registration, refer to the GPON series standard and/or the EPON series standard. This is not limited in this embodiment of this application.

Optionally, after receiving the ONU registration response message that is for rejecting the ONU registration and that is sent by the BBU, the OLT does not perform the ONU registration process, and may send an ONU registration request to the BBU again after a delay of a time period.

S210. The BBU resumes allocating the resource to the user equipment device.

Optionally, the following steps are included:

S208. After completing an ONU registration process, the OLT sends an ONU registration complete message to the BBU.

S210. After receiving the ONU registration complete message, the BBU resumes allocating the resource to the user equipment device.

Optionally, the BBU may further independently resume, based on the ONU registration start time and the size of the silent window required for the ONU registration, allocating the resource to the user equipment device. To be specific, the BBU temporarily stops, at the ONU registration start time, allocating the resource to the user equipment device, where a time for temporarily stopping allocating the resource is equal to the size of the silent window required for the ONU registration. After the silent window ends, the BBU resumes allocating the resource to the user equipment device.

Optionally, if the OLT sends, to the BBU, a request for periodically performing the ONU registration, after the BBU sends the determined ONU registration start time to the OLT, the BBU may periodically temporarily stop, based on the determined ONU registration start time, the ONU registration period, and the size of the silent window required for the ONU registration, allocating the resource to the UE, and the OLT may periodically perform the ONU registration based on the determined ONU registration start time, the ONU registration period, and the size of the silent window required for the ONU registration.

In this embodiment, the OLT sends the ONU registration request message to the baseband unit BBU, the BBU temporarily stops, after receiving the ONU registration request message, allocating the bandwidth resource to the user equipment device and sends the ONU registration response message to the OLT, and the OLT starts the ONU registration after receiving the ONU registration response message, to ensure that during the ONU registration, the UE temporarily stops an upstream service, and no upstream data arrives at the RRU and the ONU. Therefore, a case in which data cannot be sent to the BBU in a timely manner due to the ONU registration and a delay between the BBU and the RRU exceeds a delay requirement of an interface between the BBU and the RRU is avoided, and accordingly a problem that the ONU registration affects a delay-sensitive service is resolved, so that a service transmission requirement can still be met when the PON system is applied to the mobile bearer system, and user satisfaction is improved.

The foregoing embodiment may be divided into the following two specific implementations. Embodiments described herein can be applied to a frequency division duplex (Frequency Division Duplex, FDD) or time division duplex (Time Division Duplex, TDD) wireless system for a mobile bearer.

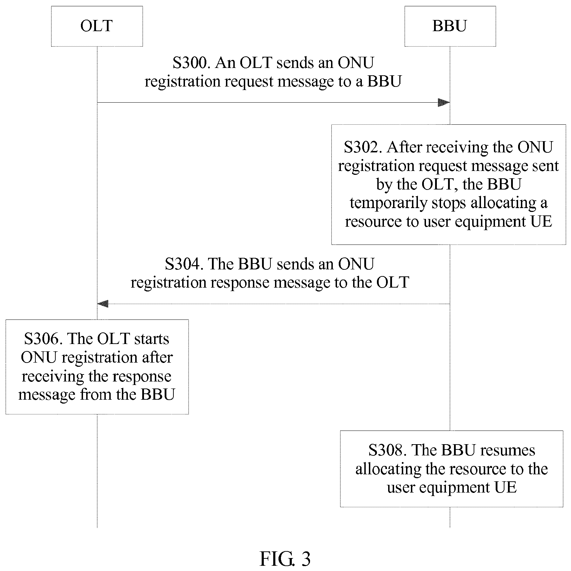

A first embodiment is shown in FIG. 3. FIG. 3 is a flowchart of one of registration methods.

S300. An OLT sends an ONU registration request message to a BBU.

Specifically, when the OLT needs to open a silent window for ONU registration, the OLT sends the ONU registration request message to the BBU.

The registration request message is a message used for the ONU registration. If a system between the BBU and an RRU is a GPON system, the ONU registration request message may be a message for requesting ONU activation. If a system between the BBU and an RRU is an EPON system, the ONU registration request message may be a message for requesting ONU discovery.

A message format of the registration request message may be a message format recorded in a standard in various PON systems such as a GPON system or an EPON system, for example, an operation, administration, and maintenance (Operation, Administration, and Maintenance, OAM) message, a physical layer operation, administration, and maintenance (Physical Layer OAM, PLOAM) message, or an optical network terminal management and control interface (optical network terminal management and control interface, OMCI) message; or may be various message formats specified in a standard in a mobile bearer system in the wireless field; or may be another customized message format. The message format used herein is not limited. In addition, these message formats can also be applied to the following various embodiments.

Optionally, the registration request message may be any one of the foregoing various messages, and message content may include a size of the silent window required for the ONU registration.

The size of the silent window required for the ONU registration may be determined based on a length of an optical fiber between the OLT and an ONU. For example, when a maximum length of optical fiber between the OLT and the ONU is 20 km, the size of the silent window required for the ONU registration is usually 250 microseconds.

The message content may further include one or more of the following: an OLT identifier, a BBU identifier, and a message type.

S302. After receiving the ONU registration request message sent by the OLT, the BBU temporarily stops allocating a resource to user equipment device.

Specifically, after receiving the ONU registration request message sent by the OLT, the BBU adjusts a resource allocation mechanism. When the ONU registration starts, the BBU temporarily stops allocating the resource to the UE, to be specific, temporarily stops an upstream service of the UE.

Optionally, after receiving the ONU registration request sent by the OLT, the BBU may immediately modulate resource allocation, to temporarily stop allocating the resource to the UE, to be specific, temporarily stop an upstream service of the UE; or may adjust resource allocation after a delay of a time period, to temporarily stop allocating the resource to the UE, to be specific, temporarily stop an upstream service of the UE.

Optionally, after receiving the ONU registration request sent by the OLT, the BBU may evaluate a current service status. If there is no emergency service currently, the BBU may adjust resource allocation, to temporarily stop allocating the resource to the UE, to be specific, temporarily stop an upstream service of the UE. If there is an emergency service currently, the BBU may continue to allocate the resource to the UE, reject the ONU registration request from the OLT, and generate an ONU registration response message for rejecting the ONU registration.

S304. The BBU sends an ONU registration response message to the OLT.

A message format of the ONU registration response message may be a message format recorded in a standard in various PON systems such as a GPON system or an EPON system, for example, an operation, administration, and maintenance (Operation, Administration, and Maintenance, OAM) message, a physical layer operation, administration, and maintenance (Physical Layer OAM, PLOAM) message, or an optical network terminal management and control interface (optical network terminal management and control interface, OMCI) message; or may be various message formats specified in a standard in a mobile bearer system in the wireless field; or may be another customized message format. The message format used herein is not limited. In addition, these message formats can also be applied to the following various embodiments.

Optionally, the ONU registration response message may be any one of the foregoing various messages, and message content includes an ONU registration response identifier.

Specifically, the BBU determines, based on the size of the silent window required for the ONU registration and the current service status, whether to allow the OLT to perform the ONU registration, and generates the ONU registration response identifier. The ONU registration response identifier may be used to identify whether the OLT can perform the ONU registration after the OLT receives the ONU registration response message.

Further, the BBU determines an ONU registration start time based on the size of the silent window required for the ONU registration and the current service status. The ONU registration response message may further include one or more of the following: a BBU identifier, an OLT identifier, a message type, an ONU registration start time, and a size of a silent window required for ONU registration.

Optionally, sequences of step S304 and step S306 may be interchanged. To be specific, the BBU first sends the ONU registration response message to the OLT, and then temporarily stops, based on the ONU registration request message and the ONU registration response message when the ONU registration starts, allocating the bandwidth resource to the user equipment device.

S306. After receiving the ONU registration response message sent by the BBU, the OLT starts an ONU registration process, and completes ONU registration.

For the ONU registration process, refer to the GPON series standard and/or the EPON series standard. This is not limited in this embodiment of this application.

Optionally, when there is an emergency service between the BBU and the UE, and the BBU rejects the ONU registration request from the OLT, after receiving the ONU registration response message that is for rejecting the ONU registration and that is sent by the BBU, the OLT does not perform the ONU registration process, and may send an ONU registration request to the BBU again after a delay of a time period.

S308. The BBU resumes allocating the resource to the user equipment device.

Optionally, after completing the ONU registration process, the OLT sends an ONU registration complete message to the BBU. After receiving the ONU registration complete message, the BBU resumes allocating the resource to the user equipment device.

Optionally, the BBU may further independently resume, based on the ONU registration start time and the size of the silent window required for the ONU registration, allocating the resource to the user equipment device. To be specific, the BBU temporarily stops, at the ONU registration start time, allocating the resource to the user equipment device, where a time for temporarily stopping allocating the resource is equal to the size of the silent window required for the ONU registration. After the silent window ends, the BBU resumes allocating the resource to the user equipment device.

In the foregoing embodiment, the OLT needs to notify the BBU each time the OLT performs the ONU registration. After receiving the ONU registration request, the BBU temporarily stops allocating the resource to the UE, and then temporarily stops data transmission of the UE until the ONU registration is completed. After the ONU registration is completed, the BBU resumes allocating the resource to the UE, and resumes the data transmission of the UE, to ensure that during the ONU registration, the UE temporarily stops an upstream service, and no upstream data arrives at the RRU and the ONU. Therefore, a case in which data cannot be sent to the BBU in a timely manner due to the ONU registration and a delay exceeds a delay requirement of an interface between the BBU and the RRU is avoided, and accordingly a problem that the ONU registration affects a delay-sensitive service is resolved, so that a service transmission requirement can still be met when the PON system is applied to the mobile bearer system, and user satisfaction is improved.

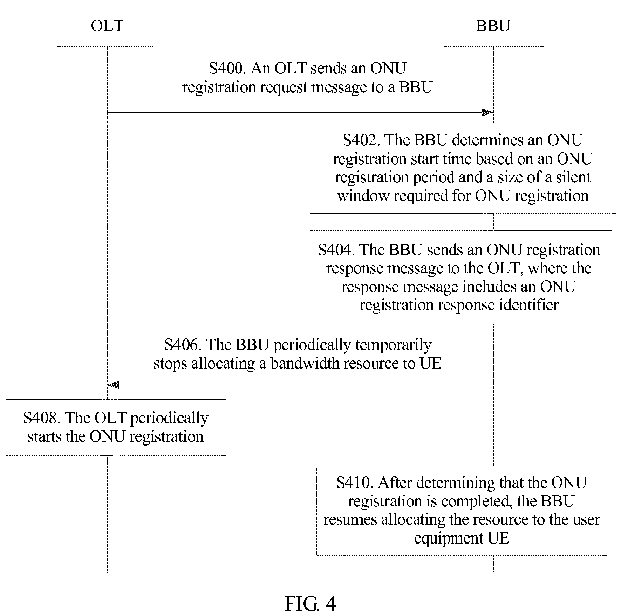

Another embodiment is shown in FIG. 4.

S400. An OLT sends an ONU registration request message to a BBU.

Specifically, when the OLT needs to open a silent window for ONU registration, the OLT sends the ONU registration request message to the BBU.

Message content of the registration request message may include a size of the silent window required for the ONU registration and an ONU registration period.

The message content may further include one or more of the following: an OLT identifier, a BBU identifier, and a message type.

The ONU registration period may be in a unit of a second or a minute. For example, the ONU registration period is 10 seconds if the OLT performs ONU registration every 10 seconds.

The size of the silent window required for the ONU registration may be determined based on a length of an optical fiber between the OLT and an ONU. For example, when a maximum length of optical fiber between the OLT and the ONU is 20 km, the size of the silent window required for the ONU registration is usually 250 microseconds.

S402. The BBU determines an ONU registration start time based on an ONU registration period and a size of a silent window required for ONU registration.

It should be noted that the BBU evaluates, based on the ONU registration period and the size of the silent window required for the ONU registration that are sent by the OLT, a current service status, a resource that needs to be allocated to the UE, and the like, determines the ONU registration start time, and generates an ONU registration response message.

S404. The BBU sends ONU registration response message to the OLT, where the response message includes an ONU registration response identifier.

The ONU registration response message may further include one or more of the following: a BBU identifier, an OLT identifier, a message type, an ONU registration start time, an ONU registration period, and a size of a silent window required for ONU registration. It should be noted herein that the ONU registration response message includes the ONU registration period and the size of the silent window required for the ONU registration, and is mainly used by the OLT to check whether the BBU accurately receives the ONU registration period and the size of the silent window required for the ONU registration, so that the BBU temporarily stops an upstream grant during the ONU registration.

S406. The BBU periodically temporarily stops allocating a bandwidth resource to user equipment device.

Specifically, when the ONU registration starts, the BBU periodically temporarily stops, based on the determined ONU registration start time, the ONU registration period, and the size of the silent window required for the ONU registration, allocating the resource to the UE.

S408. The OLT periodically starts the ONU registration.

Specifically, the OLT periodically starts the ONU registration in the ONU registration period based on the ONU registration start time, the ONU registration period, and the size of the silent window required for the ONU registration that are delivered by the BBU.

For the ONU registration, refer to the GPON series standard and/or the EPON series standard. This is not limited in this embodiment of this application.

S410. After determining that the ONU registration is completed, the BBU resumes allocating the resource to the UE.

Either a manner in which the BBU determines an ONU registration complete time based on the size of the silent window negotiated with the OLT in advance, the ONU registration start time, or the like, and resumes, after the ONU registration is completed, allocating the resource to the UE, or a manner in which the OLT sends the registration complete message to the BBU after completing the registration each time, and then the BBU resumes allocating the resource to the UE can be used, and is not limited herein.

It should be noted that a difference between this embodiment and the embodiment corresponding to FIG. 3 lies in that the OLT sends, to the BBU in advance, the ONU registration period and the size of the silent window required for the ONU registration, so that the BBU can determine the ONU registration start time based on the foregoing carried information, and periodically temporarily stop, based on the determined ONU registration start time, allocating the resource to the UE, to be specific, temporarily stop the UE from sending data to a central office. In this way, the OLT does not need to send a message to the BBU each time the OLT performs the ONU registration, to notify the BBU that the ONU registration needs to be started, to ensure that during the ONU registration, the UE temporarily stops an upstream service, and no upstream data arrives at an RRU and the ONU. Therefore, a case in which data cannot be sent to the BBU in a timely manner due to the ONU registration and a delay exceeds a delay requirement of an interface between the BBU and the RRU is avoided, and accordingly a problem that the ONU registration affects a delay-sensitive service is resolved, so that a service transmission requirement can still be met when a PON system is applied to a mobile bearer system, and user satisfaction is improved.

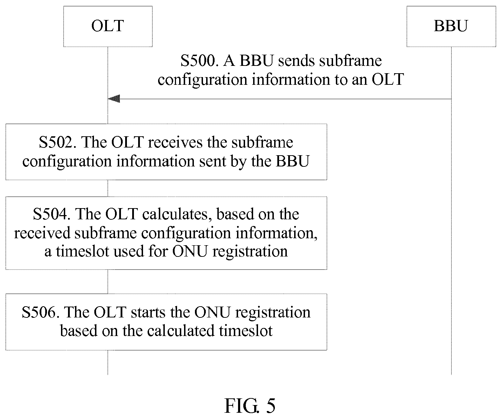

FIG. 5 is a flowchart of another registration method applied to a scenario in which a wireless network is in a TDD mode. Details are as follows:

In the TDD mode, sending and receiving occur in different timeslots on a same frequency channel, and a time is used to separate a transmit channel from a receive channel. For example, at a moment A, a base station can only send a signal to UE, but cannot receive a signal from the UE. In other words, only a downlink signal is transmitted between the base station and the UE. At a moment B, the base station can only receive a signal from the UE, but cannot send a signal to the UE. In other words, only an uplink signal is transmitted between the base station and the UE.

A network side device includes a baseband unit BBU and an optical line terminal OLT connected to the BBU. For details, refer to the system architecture shown in FIG. 1. The method includes the following steps.

S500. The BBU sends subframe configuration information to the OLT.

In an example of a TDD-LTE system, each radio frame has a time domain length of 10 ms and is divided into two 5 ms half-frames, and each half-frame is further divided into five 1 ms subframes. The subframes are classified into an uplink subframe, a downlink subframe, and a special subframe. Seven subframe configurations are supported in a protocol, and are applicable to different service requirements.

Table 1 shows the subframe configuration information.

**Table 1: Subframe configuration information**

| Uplink-downlink configuration | Downlink-to-uplink switch-point periodicity | Subframe number | | | | | | | | | |
|---|---|---|---|---|---|---|---|---|---|---|---|
| | | 0 | 1 | 2 | 3 | 4 | 5 | 6 | 7 | 8 | 9 |
| 0 | 5 ms | D | S | U | U | U | D | S | U | U | U |
| 1 | 5 ms | D | S | U | U | D | D | S | U | U | D |
| 2 | 5 ms | D | S | U | D | D | D | S | U | D | D |
| 3 | 10 ms | D | S | U | U | U | D | D | D | D | D |
| 4 | 10 ms | D | S | U | U | D | D | D | D | D | D |
| 5 | 10 ms | D | S | U | D | D | D | D | D | D | D |
| 6 | 5 ms | D | S | U | U | U | D | S | U | U | D |

It can be learned from Table 1 that TDD-LTE system supports two downlink-to-uplink switch-point periodicities: 5 ms and 10 ms. Regardless of a switch-point periodicity, both subframes 0 and 5 are downlink subframes, and details are as follows:

5 ms switch-point: including subframe configurations 0, 1, 2, and 6, and having special subframes in both half-frames. The special subframes are respectively located in subframes 1 and 6.

10 ms switch-point: including subframe configurations 3, 4, and 5, and having a special subframe only in a subframe 1. It may be considered that a subframe 1 is a special subframe whose DwPTS length is 1 ms.

Different uplink-downlink subframe ratios are defined in different subframe configurations. For example, in the configuration 5, an uplink-downlink subframe ratio is 1:8, which is applicable to a scenario in which a downlink application is focused. In the configuration 0, an uplink-downlink subframe ratio is 3:1, which is applicable to a scenario in which an uplink application is focused.

The BBU sends the foregoing subframe configuration information to the OLT.

S502. The OLT receives the subframe configuration information sent by the BBU.

S504. The OLT monitors a downstream and/or upstream data distribution status, and calculates, based on the received subframe configuration information, a timeslot used for ONU registration.

The OLT monitors the downstream and/or upstream data arrival status, and obtains, through calculation based on the subframe configuration information, a timeslot that is corresponding to a downlink subframe and that is in the subframe configuration information, so that the OLT can select the timeslot corresponding to the downlink subframe as the timeslot used for the ONU registration.

Herein, the OLT mainly obtains, through calculation by using the subframe configuration information fed back by the BBU and the monitored downstream and/or upstream data distribution status, the timeslot that is corresponding to the downlink subframe and that is in the subframe configuration information. In this case, the timeslot is just an uplink idle timeslot, and the UE has no data, to be specific, an upstream channel between the OLT and an ONU is also idle, so that the OLT can use the timeslot to complete the ONU registration, thereby improving timeslot utilization and system transmission efficiency.

Optionally, the OLT may monitor the downstream and/or upstream data arrival status for a long time, obtain radio link uplink-downlink subframe configuration information through evaluation, and obtain, through calculation based on the subframe configuration information, a timeslot that is corresponding to a downlink subframe and that is in the subframe configuration information, so that the OLT can select the timeslot corresponding to the downlink subframe as the timeslot used for the ONU registration.

S506. The OLT starts the ONU registration based on the calculated timeslot.

The OLT starts the ONU registration based on the calculated timeslot, and completes an ONU registration process.

In this embodiment, the OLT calculates, based on the received subframe configuration information and the monitored downstream and/or upstream data distribution status by using the subframe configuration information provided by the baseband unit BBU, the timeslot used for the optical network unit ONU registration, to perform the ONU registration by using a transmission timeslot that is of the downlink subframe and that is in the subframe configuration information of the BBU while avoiding impact of the ONU registration on a delay-sensitive service, so that a transmission rate of upstream service data is improved, and a problem that a relatively large delay exists during sending of upstream service data because a registered ONU can send the upstream service data only after a silent window ends, and consequently a system delay requirement of the delay-sensitive service cannot be met is resolved.

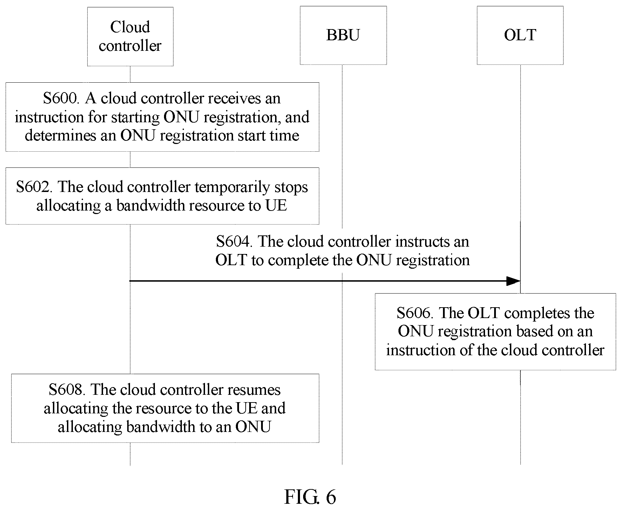

FIG. 6 shows another registration method applied to an architecture of a data communications system shown in FIG. 1a.

In FIG. 1a, the system architecture includes a cloud controller, a BBU, an OLT, an ONU, an RRU, and UE. As shown in FIG. 1a, the cloud controller may be connected to the BBU, and may be connected to the OLT by using the BBU; or the cloud controller may be separately connected to the BBU and the OLT. The OLT is connected to each ONU by using an optical distribution network ODN, the ONU is connected to the RRU, and the RRU is wirelessly connected to the UE. The UE may be various user equipment devices, for example, a mobile phone or a computer.

A difference between the system architecture in FIG. 1a and the system architecture in FIG. 1 lies in that in FIG. 1a, the cloud controller is further added to a network side. The cloud controller is configured to jointly schedule a wireless mobile bearer and PON network bandwidth. Specifically, other network elements and connection relationships are the same as those in FIG. 1.

The registration method applied to FIG. 1a is shown in FIG. 6, and specifically includes the following steps.

S600. The cloud controller receives an instruction for starting ONU registration, and determines an ONU registration start time.

Specifically, the cloud controller may receive an instruction to start single ONU registration, to be specific, an operator starts the ONU registration in a PON device management system and/or on a PON management platform, and the PON device management system and/or the PON management platform initiates the ONU registration instruction to the cloud controller.

Further, the operator may periodically start the ONU registration in the PON device management system and/or on the PON management platform through setting, and the PON device management system and/or the PON management platform periodically initiates the ONU registration instruction to the cloud controller.

Further, the operator may periodically start the ONU registration on the cloud controller through setting, so that the cloud controller can periodically trigger the ONU registration based on a specified ONU registration period.

The ONU registration instruction may include but is not limited to one or more of the following: an ONU registration period, a size of a silent window required for the ONU registration, and an identifier of the OLT that is to start the ONU registration.

Specifically, the cloud controller determines the ONU registration start time based on the ONU registration period and the size of the silent window required for the ONU registration that are in the ONU registration instruction.

The ONU registration instruction may further include an identifier of the BBU connected to the OLT that is to start the ONU registration.

Optionally, the cloud controller may determine, based on the identifier that is included in the ONU registration instruction and that is of the OLT that is to start the ONU registration, the identifier of the BBU connected to the OLT. Further, the cloud controller may determine the ONU registration start time based on the ONU registration period, the size of the silent window required for the ONU registration, and a status in which the BBU allocates a resource to the UE.

Optionally, after receiving the instruction for starting the ONU registration, the cloud controller may evaluate a current service status. If there is no emergency service currently, the cloud controller immediately starts the ONU registration, in other words, set a current moment to the ONU registration start time. If there is an emergency service currently, the cloud controller may postpone starting the ONU registration, for example, set, to the ONU registration start time, a moment that is after the emergency service is completed.

Further, when the method is applied to a scenario in which a wireless network is in a TDD mode, the cloud controller determines the ONU registration start time based on an uplink-downlink subframe configuration in the wireless network, and performs the ONU registration in an uplink idle timeslot in the wireless network.

S602. The cloud controller temporarily stops allocating a bandwidth resource to the UE.

Specifically, the cloud controller temporarily stops, based on the ONU registration start time, allocating the bandwidth resource to the user equipment device.

Further, the cloud controller temporarily stops allocating the bandwidth resource to the UE of the BBU connected to the OLT that is to start the ONU registration.

Optionally, when the method is applied to the scenario in which the wireless network is in the TDD mode, the cloud controller determines the ONU registration start time based on the uplink-downlink subframe configuration in the wireless network, and performs the ONU registration at an uplink idle moment in the wireless network. Therefore, the cloud controller does not need to temporarily stop allocating the bandwidth resource to the UE.

S604. The cloud controller instructs the OLT to complete the ONU registration.

Specifically, the cloud controller temporarily stops, based on the ONU registration start time and the size of the silent window, granting service bandwidth to all ONUs of the OLT that is to start the ONU registration, and opens the silent window.

S606. The OLT completes the ONU registration based on an instruction of the cloud controller.

Specifically, the OLT completes the ONU registration in the determined silent window based on the instruction of the cloud controller.

S608. The cloud controller resumes allocating the bandwidth resource to the UE and the ONU.

Specifically, after the OLT completes the ONU registration, the cloud controller resumes allocating the bandwidth resource to the UE of the BBU connected to the OLT that is to start the ONU registration.

Further, after the OLT completes the ONU registration, the cloud controller resumes granting the service bandwidth to the ONU of the OLT.

Allocating the bandwidth resource is temporarily stopped.

Specifically, an embodiment is described as follows:

Steps S700 to S708 are a process in which a cloud controller jointly schedules a radio resource and a PON bandwidth resource. A procedure of a method for performing ONU registration based on the cloud controller is described in steps S710 to S716.

S700. UE requests a bandwidth resource from the cloud controller by using a BBU.

S702. An ONU requests a bandwidth resource from the cloud controller by using an OLT.

S704. The cloud controller calculates a radio resource and PON bandwidth.

Specifically, the cloud controller performs calculation based on the bandwidth resource requested by the UE, namely, the radio resource, and the bandwidth resource requested by the ONU, namely, the PON bandwidth resource, to determine the radio resource allocated to the UE and the PON bandwidth resource allocated to the ONU.

S706. The cloud controller delivers an allocated radio resource to the UE by using the BBU.

S708. The cloud controller delivers a PON bandwidth grant to the OLT.

The following describes the procedure of the method for performing ONU registration based on the cloud controller.

S710. The cloud controller temporarily stops allocating the radio resource and the PON bandwidth.

Specifically, the cloud controller temporarily stops, based on the bandwidth resource requested by the UE, the bandwidth resource requested by the ONU, and a size of a silent window required for ONU registration, allocating the radio resource and allocating the PON bandwidth.

Specifically, when the cloud controller receives an instruction to start single ONU registration, the cloud controller determines an ONU registration start time based on the bandwidth resource requested by the UE, the bandwidth resource requested by the ONU, and the size of the silent window required for the ONU registration. When the ONU registration starts, the cloud controller temporarily stops allocating the radio resource and allocating the PON bandwidth.

When the cloud controller receives an instruction to periodically start the ONU registration, the cloud controller determines an ONU registration start time based on the bandwidth resource requested by the UE, the bandwidth resource requested by the ONU, an ONU registration period, and the size of the silent window required for the ONU registration; and periodically temporarily stops, based on the ONU registration period when the ONU registration starts, allocating the radio resource and allocating the PON bandwidth.

S712. The cloud controller instructs the OLT to start ONU registration.

Specifically, message content that the cloud controller instructs the OLT to start the ONU registration may include an ONU registration start time.

The message content may further include one or more of the following: an OLT identifier, a message type, an ONU registration period, and a size of a silent window required for ONU registration.

S714. The OLT opens a silent window, and starts the ONU registration.

For the ONU registration, refer to the GPON series standard and/or the EPON series standard. This is not limited in this embodiment of this application.

S716. The cloud controller resumes allocating the radio resource to the UE and allocating the PON bandwidth.

Specifically, the cloud controller may further resume, based on the ONU registration start time and the size of the silent window required for the ONU registration, allocating the resource to the user equipment device and allocating the PON bandwidth. To be specific, the cloud controller temporarily stops, at the ONU registration start time, allocating the resource to the user equipment device and allocating the PON bandwidth, where a time for temporarily stopping allocating the resource and allocating the PON bandwidth is equal to the size of the silent window required for the ONU registration. After the silent window ends, the cloud controller resumes allocating the resource to the user equipment device and allocating the PON bandwidth.

In this embodiment, the cloud controller centrally allocates and schedules resources of the OLT and the BBU, to improve a transmission rate of upstream service data while avoiding impact of the ONU registration on a delay-sensitive service, so that a problem that a relatively large delay exists during sending of upstream service data because a registered ONU can send the upstream service data only after a silent window ends, and consequently a system delay requirement of the delay-sensitive service cannot be met is resolved.

The following specifically describes apparatus embodiments and system embodiments. It should be noted that to avoid repetition, all apparatuses and systems in the following apparatus and system embodiments are applicable to the registration method procedures in the foregoing various embodiments. For brief description herein, the foregoing embodiments of the various registration methods may be cited for further description if necessary.

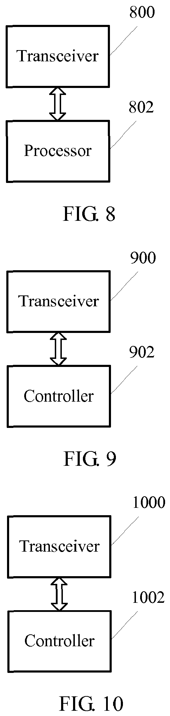

FIG. 8 shows a network side device. The network side device may be an optical line terminal OLT in a PON system. Details are as follows:

The network side device includes:
a transceiver 800, configured to: send an optical network unit ONU registration request message to a baseband unit BBU, and receive a response message from the BBU; and
a processor 802, configured to start the ONU registration after the transceiver 802 receives the response message from the BBU.

Further, optionally, the registration request includes a size of a silent window required for the ONU registration.

Further, optionally, the response message of the BBU includes an ONU registration response identifier determined by the BBU.

The transceiver is further configured to send an ONU registration complete message to the BBU.

The processor 800 may be a media access controller MAC or another microprocessor. The transceiver may be disposed in an optical module of an OLT, and the transceiver may include a transmitter and a receiver. The transmitter and the receiver may be integrated together or may be independently separated.

FIG. 9 shows a network side device. The network side device may be a baseband unit BBU.

The network side device includes:
a transceiver 900, configured to receive a registration request message sent by the OLT; and
a controller 902, configured to temporarily stop, based on the registration request message, allocating a bandwidth resource to user equipment device.

Further, optionally, the registration request message includes a size of a silent window required for ONU registration.

Further, optionally, the controller 902 is further configured to determine an ONU registration start time based on the size of the silent window required for the ONU registration.

The transceiver 900 is further configured to send the determined ONU registration start time to the OLT.

The transceiver 900 is further configured to send, to the OLT, an ONU registration response identifier determined by a BBU, where the ONU registration response identifier is used to identify whether the OLT can perform ONU registration after the OLT receives an ONU registration response message.

The controller 902 may be a microprocessor or another processor, and is configured to allocate a resource to the user equipment device in a wireless mobile bearer network.

For the network side devices (the OLT and the BBU) in FIG. 8 and FIG. 9, refer to the system architecture in FIG. 1. For details about functions completed by the OLT and the BBU in an ONU registration process, refer to FIG. 2 to FIG. 6 in the method embodiments and specific descriptions in corresponding embodiments. Details are not described herein again.

Specifically, for a detailed process of interaction between the OLT and the BBU, refer to FIG. 2 to FIG. 4 and specific descriptions in the corresponding method embodiments.

In the foregoing embodiments, the OLT sends the ONU registration request message to the baseband unit BBU, the BBU temporarily stops, after receiving the ONU registration request message, allocating the bandwidth resource to the user equipment device, and the OLT starts the ONU registration after receiving the response message from the BBU, to ensure that during the ONU registration, the UE temporarily stops an upstream service, and no upstream data arrives at an RRU and an ONU. Therefore, a case in which data cannot be sent to the BBU in a timely manner due to the ONU registration and a delay exceeds a delay requirement of an interface between the BBU and the RRU is avoided, and accordingly a problem that the ONU registration affects a delay-sensitive service is resolved, so that a service transmission requirement can still be met when the PON system is applied to a mobile bearer system, and user satisfaction is improved.

FIG. 10 shows a network side device. The network side device may be an optical line terminal OLT in a PON system.

The network side device includes:
a transceiver 1000, configured to receive subframe configuration information sent by a baseband unit BBU; and
a controller 1002, configured to: calculate, based on the received subframe configuration information, a timeslot used for optical network unit ONU registration, and start the ONU registration based on the calculated timeslot.

Further, optionally, the controller 1002 is further configured to send an ONU registration request message to the BBU by using the transceiver 1000.

Further, optionally, the controller is specifically configured to: calculate a timeslot that is corresponding to configuration information of a downlink subframe and that is in the subframe configuration information, and select the calculated timeslot as the timeslot used for the ONU registration.

The network side device determines, by using the subframe configuration information of the BBU, the timeslot that is corresponding to the configuration information of the downlink subframe and that is in the subframe configuration information as the timeslot used for the ONU registration. In this timeslot, UE does not send an uplink subframe to the BBU, and the ONU registration is performed by using the timeslot. This can not only resolve an existing problem of a low delay, but also improve a transmission rate and transmission efficiency of upstream service data, thereby greatly improving bandwidth utilization.

Specifically, for a detailed process of interaction between the OLT and the BBU, refer to FIG. 5 and a specific description in the corresponding method embodiment.

In this embodiment, the OLT calculates, based on the received subframe configuration information by using the subframe configuration information of the baseband unit BBU, the timeslot used for the optical network unit ONU registration, to perform the ONU registration by using a transmission timeslot that is of the downlink subframe and that is in the subframe configuration information of the BBU while avoiding impact of the ONU registration on a delay-sensitive service, so that a transmission rate of upstream service data is improved, and a problem that a relatively large delay exists during sending of upstream service data because a registered ONU can send the upstream service data only after a silent window ends, and consequently a system delay requirement of the delay-sensitive service cannot be met is resolved.

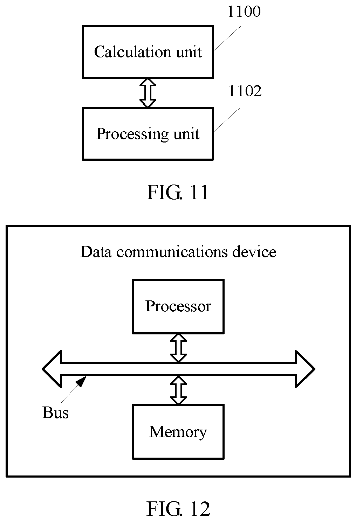

FIG. 11 shows a network side device. The network side device may be a cloud controller, and may be specifically the cloud controller in the system shown in FIG. 1a.

The network side device includes:
a calculation unit 1100, configured to determine an ONU registration start time; and
a processing unit 1102, configured to temporarily stop, based on the ONU registration start time, allocating a bandwidth resource to user equipment device.

Further, optionally, the calculation unit 1100 is specifically configured to: receive an instruction for starting ONU registration, where the instruction for starting the ONU registration includes an ONU registration period and a size of a silent window required for the ONU registration; and determine the ONU registration start time based on the ONU registration period and the size of the silent window required for the ONU registration that are in the ONU registration instruction.

Specifically, for a detailed process of interaction between a OLT and a BBU, refer to FIG. 1a, FIG. 6, and FIG. 7 and specific descriptions in the corresponding method embodiments.

It should be noted that the cloud controller is a device that is independent of the OLT and the BBU and that separately exists on a network side. The cloud controller sends a message or indication information to the OLT or the BBU, and a dynamic bandwidth allocation (Dynamic Bandwidth Allocation, DBA) module of the OLT receives and correspondingly processes the message or the indication information, or a pool of the BBU receives and correspondingly processes the message or the indication information.

In this embodiment, the cloud controller centrally allocates and schedules resources of the OLT and the BBU, to improve a transmission rate of upstream service data while avoiding impact of the ONU registration on a delay-sensitive service, so that a problem that a relatively large delay exists during sending of upstream service data because a registered ONU can send the upstream service data only after a silent window ends, and consequently a system delay requirement of the delay-sensitive service cannot be met is resolved.

FIG. 1 shows a data communications system. The system includes a baseband unit BBU, a remote radio unit RRU, an optical line terminal OLT connected to the BBU, and an optical network unit ONU connected to the RRU. The OLT is connected to each ONU by using an optical distribution network ODN.

The OLT sends an optical network unit ONU registration request message to the baseband unit BBU, and starts the ONU registration after receiving a response message from the BBU.

The BBU is configured to: receive the registration request message sent by the OLT, and temporarily stop, based on the registration request message, allocating a bandwidth resource to user equipment device.

Further, optionally, the registration request includes a size of a silent window required for the ONU registration.

Further, optionally, the response message of the BBU includes an ONU registration response identifier determined by the BBU.

Further, optionally, the OLT sends an ONU registration complete message to the BBU.

Further, optionally, the BBU determines an ONU registration start time based on the size of the silent window required for the ONU registration, and sends the determined ONU registration start time to the OLT.

Further, optionally, the BBU sends, to the OLT, the ONU registration response identifier determined by the BBU, where the ONU registration response identifier is used to identify whether the OLT can perform the ONU registration after the OLT receives the ONU registration response message.

The registration methods described in FIG. 2 to FIG. 4 and the corresponding embodiments can be applied to the system shown in FIG. 1. For details about specific functions completed by the OLT and the BBU, refer to descriptions in the corresponding embodiments.

In the data communications system provided in this embodiment, the OLT sends the ONU registration request message to the baseband unit BBU, the BBU temporarily stops, after receiving the ONU registration request message, allocating the bandwidth resource to the user equipment device, and the OLT starts the ONU registration after receiving the response message from the BBU, to avoid impact of the ONU registration on a delay-sensitive service, so that during the ONU registration, the BBU temporarily stops allocating the resource to the UE, thereby improving user satisfaction.

FIG. 1 shows a data communications system. The system includes a baseband unit BBU, a remote radio unit RRU, an optical line terminal OLT connected to the BBU, and an optical network unit ONU connected to the RRU. The OLT is connected to each ONU by using an optical distribution network ODN.

The OLT is configured to: receive subframe configuration information sent by the baseband unit BBU; calculate, based on the received subframe configuration information, a timeslot used for ONU registration; and start the ONU registration based on the calculated timeslot.

The BBU is configured to send the subframe configuration information to the OLT.

The registration method described in FIG. 5 and the corresponding embodiment can be applied to the system shown in FIG. 1. For details about specific functions completed by the OLT and the BBU, refer to a description in the corresponding embodiment.

In this embodiment, the OLT calculates, based on the received subframe configuration information by using the subframe configuration information of the baseband unit BBU, the timeslot used for the optical network unit ONU registration, to perform the ONU registration by using a transmission timeslot that is of a downlink subframe and that is in the subframe configuration information of the BBU while avoiding impact of the ONU registration on a delay-sensitive service, so that a transmission rate of upstream service data is improved, and a problem that a relatively large delay exists during sending of upstream service data because a registered ONU can send the upstream service data only after a silent window ends, and consequently a system delay requirement of the delay-sensitive service cannot be met is resolved.

FIG. 1a shows a data communications system. The system includes a cloud controller, a baseband unit BBU, a remote radio unit RRU, an optical line terminal OLT connected to the BBU, and an optical network unit ONU connected to the RRU. The OLT is connected to each ONU by using an optical distribution network ODN.

The cloud controller is configured to: determine an ONU registration start time, and instruct, based on the ONU registration start time, the BBU to temporarily stop allocating a bandwidth resource to user equipment device.

The OLT is configured to receive an instruction from the cloud controller to start ONU registration.

The BBU is configured to temporarily stop, based on the instruction of the cloud controller, allocating the bandwidth resource to the user equipment device.

Further, the determining, by the cloud controller, an ONU registration start time specifically includes:
the cloud controller receives an instruction for starting the ONU registration, where the instruction for starting the ONU registration includes an ONU registration period and a size of a silent window required for the ONU registration; and determines the ONU registration start time based on the ONU registration period and the size of the silent window required for the ONU registration that are in the ONU registration instruction.

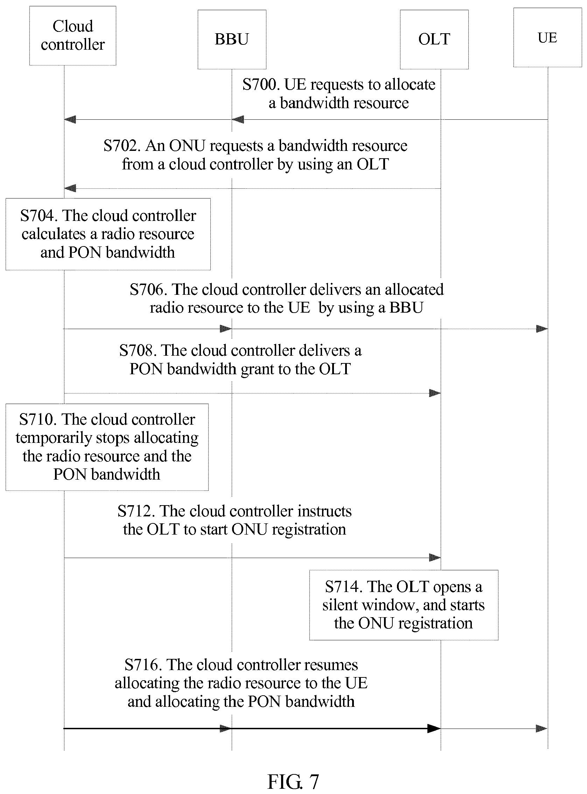

The registration methods described in FIG. 6 and FIG. 7 and the corresponding embodiments can be applied to the system shown in FIG. 1a. For details about specific functions completed by the OLT and the BBU, refer to descriptions in the corresponding embodiments.

In the data communications system provided in this embodiment, the cloud controller centrally allocates and schedules resources of the OLT and the BBU, to improve a transmission rate of upstream service data while avoiding impact of the ONU registration on a delay-sensitive service, so that a problem that a relatively large delay exists during sending of upstream service data because a registered ONU can send the upstream service data only after a silent window ends, and consequently a system delay requirement of the delay-sensitive service cannot be met is resolved.

An embodiment of the present invention further provides a data communications device. As shown in FIG. 12, the data communications device includes a processor, a memory, and a bus system. The processor and the memory are connected by using the bus system, the memory is configured to store an instruction, and the processor is configured to execute the instruction stored in the memory.

The processor is configured to: send an optical network unit ONU registration request message to a baseband unit BBU, and start the ONU registration after receiving a response message from the BBU.

In another embodiment, the processor may be configured to: receive a registration request message sent by the OLT, and temporarily stop, based on the registration request message, allocating a bandwidth resource to user equipment device.

In another embodiment, the processor may be further configured to: receive subframe configuration information sent by a baseband unit BBU; calculate, based on the received subframe configuration information, a timeslot used for optical network unit ONU registration; and start the ONU registration based on the calculated timeslot.

In another embodiment, the processor may be further configured to: determine an ONU registration start time, and instruct, based on the ONU registration start time, a BBU to temporarily stop allocating a bandwidth resource to user equipment device.

The sequence numbers of the foregoing embodiments of this application are merely for illustrative purposes, and are not intended to indicate priorities of the embodiments.

In this embodiment, after receiving the ONU registration request message, the data communications device temporarily stops allocating the bandwidth resource to the user equipment device, to ensure that no upstream data arrives at an RRU and an ONU during the registration. Therefore, a case in which data cannot be sent to the BBU in a timely manner due to the ONU registration and a delay exceeds a delay requirement of an interface between the BBU and the RRU is avoided, and a problem that the ONU registration affects a delay-sensitive service is resolved, so that a service transmission requirement can still be met when a PON system is applied to a mobile bearer system, and user satisfaction is improved.

A person of ordinary skill in the art may understand that all or some of the steps of the embodiments may be implemented by hardware or a program instructing related hardware. The program may be stored in a computer-readable storage medium. The storage medium mentioned above may include a read-only memory, a magnetic disk, an optical disc, or the like.

The foregoing descriptions are merely specific embodiments of this application, but are not intended to limit this application. Any modification or improvement made without departing from the principle of this application should fall within the protection scope of the claims.

## Claims

1. A registration method, applied to a network side device in a mobile bearer system, wherein the network side device comprises a baseband unit, BBU, and an optical line terminal ,OLT, connected to the BBU, and the method comprises:
receiving (S202), by the BBU, a registration request message sent by the OLT, wherein the registration request message comprises a size of a silent window required for ONU registration;
determining, based on the size of the silent window required for ONU registration, whether to allow the OLT to perform the ONU registration;
temporarily stopping (S204), by the BBU based on the registration request message, allocating a bandwidth resource to user equipment device when determining to allow the OLT to perform the ONU registration; and
instructing (S206), by the BBU, the OLT to complete ONU registration.

2. The registration method according to claim 1, wherein the method further comprises:
determining, by the BBU, an ONU registration start time based on the size of the silent window required for the ONU registration; and
sending, by the BBU, the determined ONU registration start time to the OLT.

3. The registration method according to claim 1, wherein the method further comprises:
sending, by the BBU to the OLT, an ONU registration response identifier determined by the BBU, wherein the ONU registration response identifier is used to identify whether the OLT can perform the ONU registration after the OLT receives an ONU registration response message.

4. A registration method, applied to a mobile bearer system, wherein the method comprises:
sending, by an optical line terminal ,OLT, an optical network unit ,ONU ,registration request message to a baseband unit , BBU, wherein the registration request message comprises a size of a silent window required for ONU registration;
receiving, by an optical line terminal, OLT, subframe configuration information sent by a baseband unit ,BBU;
calculating, by the OLT based on the received subframe configuration information, a timeslot used for optical network unit ,ONU, registration; and
starting, by the OLT, the ONU registration based on the calculated timeslot.

5. The registration method according to claim 4, wherein the calculating, by the OLT based on the received subframe configuration information, a timeslot used for ONU registration specifically comprises:
calculating, by the OLT, a timeslot that is corresponding to configuration information of a downlink subframe and that is in the subframe configuration information; and
selecting, by the OLT, the calculated timeslot as the timeslot used for the ONU registration.

6. A registration method, applied to a network side device in a mobile bearer system, wherein the network side device comprises a cloud controller, a baseband unit, BBU, and an optical line terminal OLT connected to the BBU, and the method comprises:
receiving, by the cloud controller, an instruction that is for starting an ONU registration and that comprises a size of a silent window required for the ONU registration, and determining an ONU registration start time based on the size of the silent window required for the ONU registration that is in the ONU registration instruction;
temporarily stopping, by the cloud controller based on the ONU registration start time, allocating a bandwidth resource to user equipment device; and
instructing, by the cloud controller based on the ONU registration start time, the OLT to complete ONU registration.

7. A network side device, wherein the network side device comprises:
a transceiver (900), configured to receive a registration request message sent by an OLT, wherein the registration request message comprises a size of a silent window required for ONU registration; and
a controller (902), configured to determine based on the size of the silent window required for ONU registration, whether to allow the OLT to perform the ONU registration, and further configured to temporarily stop, based on the registration request message, allocating a bandwidth resource to user equipment device when determining to allow the OLT to perform the ONU registration.

8. The network side device according to claim 7, wherein the controller is further configured to determine an ONU registration start time based on the size of the silent window required for the ONU registration; and
the transceiver is further configured to send the determined ONU registration start time to the OLT.

9. The network side device according to claim 7, wherein the transceiver is further configured to send, to the OLT, an ONU registration response identifier determined by a BBU, wherein the ONU registration response identifier is used to identify whether the OLT can perform the ONU registration after the OLT receives an ONU registration response message.

10. A network side device, wherein the network side device comprises:
a transceiver, configured to: send an optical network unit ,ONU, registration request message to a baseband unit ,BBU, wherein the registration request message comprises a size of a silent window required for ONU registration, and receive a response message from the BBU;
the transceiver, configured to receive subframe configuration information sent by a baseband unit BBU; and
a controller, configured to: calculate, based on the received subframe configuration information, a timeslot used for optical network unit ,ONU, registration, and start the ONU registration based on the calculated timeslot.

11. The network side device according to claim 10, wherein the controller is specifically configured to: calculate a timeslot that is corresponding to configuration information of a downlink subframe and that is in the subframe configuration information, and select the calculated timeslot as the timeslot used for the ONU registration.

12. A data communications system, wherein the system comprises a baseband unit BBU, a remote radio unit RRU, an optical line terminal OLT connected to the BBU, and an optical network unit ONU connected to the RRU; the OLT is connected to each ONU by using an optical distribution network ODN; and the OLT comprises the network side device according to any one of claims 10 to 11, and the BBU comprises the network side device according to any one of claims 7 to 9.

## Patentansprüche

1. Registrierungsverfahren, das auf eine netzwerkseitige Vorrichtung in einem mobilen Trägersystem angewendet wird, wobei die netzwerkseitige Vorrichtung eine Basisbandeinheit, BBU, und ein mit der BBU verbundenes optisches Leitungsendgerät, OLT, umfasst, und das Verfahren umfasst:
Empfangen (S202) einer vom OLT gesendeten Registrierungsanforderungsnachricht durch die BBU, wobei die Registrierungsanforderungsnachricht eine Größe eines für die ONU-Registrierung erforderlichen stillen Fensters umfasst;
Bestimmen, basierend auf der Größe des für die ONU-Registrierung erforderlichen stillen Fensters, ob dem OLT das Durchführen der ONU-Registrierung gestattet werden soll;
vorübergehendes Anhalten (S204), durch die BBU, basierend auf der Registrierungsanforderungsnachricht, Zuweisen einer Bandbreitenressource zu dem Benutzergerät, wenn bestimmt wird, dass dem OLT das Durchführen der ONU-Registrierung gestattet wird; und
Anweisen (S206), durch die BBU, des OLTs, die ONU-Registrierung abzuschließen.

2. Registrierungsverfahren nach Anspruch 1, wobei das Verfahren ferner umfasst:
Bestimmen, durch die BBU, einer ONU-Registrierungsstartzeit basierend auf der Größe des stillen Fensters, das für die ONU-Registrierung erforderlich ist; und
Senden, durch die BBU, der bestimmten ONU-Registrierungsstartzeit an das OLT.

3. Registrierungsverfahren nach Anspruch 1, wobei das Verfahren ferner umfasst:
Senden, durch die BBU, eines von der BBU bestimmten ONU-Registrierungsantwort-Identifikators an das OLT, wobei der ONU-Registrierungsantwort-Identifikator verwendet wird, um zu identifizieren, ob das OLT die ONU-Registrierung durchführen kann, nachdem das OLT eine ONU-Registrierungsantwortnachricht empfängt.

4. Registrierungsverfahren, angewandt auf ein mobiles Trägersystem, wobei das Verfahren umfasst:
Senden, durch ein optisches Leitungsendgerät, OLT, einer optischen Netzwerkeinheit-, ONU-Registrierungsanforderungsnachricht an eine Basisbandeinheit, BBU, wobei die Registrierungsanforderungsnachricht eine Größe eines für die ONU-Registrierung erforderlichen stillen Fensters umfasst;
Empfangen, durch ein optisches Leitungsendgerät, OLT, von Subframe-Konfigurationsinformationen, die von einer Basisbandeinheit, BBU, gesendet werden;
Berechnen, durch das OLT, basierend auf der empfangenen Subframe-Konfigurationsinformation, eines Zeitschlitzes, der für die Registrierung der optischen Netzwerkeinheit, ONU, verwendet wird; und
Starten, durch das OLT, der ONU-Registrierung basierend auf dem berechneten Zeitschlitz.

5. Registrierungsverfahren nach Anspruch 4, wobei das Berechnen eines für die ONU-Registrierung verwendeten Zeitschlitzes durch das OLT basierend auf den empfangenen Subframe-Konfigurationsinformationen insbesondere umfasst:
Berechnen, durch das OLT, eines Zeitschlitzes, der den Konfigurationsinformationen eines Downlink-Subframes entspricht und der sich in den Subframe-Konfigurationsinformationen befindet; und
Auswählen, durch das OLT, des berechneten Zeitschlitzes als Zeitschlitz, der für die ONU-Registrierung verwendet wird.

6. Registrierungsverfahren, das auf eine netzwerkseitige Vorrichtung in einem mobilen Trägersystem angewendet wird, wobei die netzwerkseitige Vorrichtung eine Cloud-Steuerung, eine Basisbandeinheit, BBU, und ein mit der BBU verbundenes optisches Leitungsendgerät, OLT, umfasst, und das Verfahren umfasst:
Empfangen, durch die Cloud-Steuerung, eines Befehls, der zum Starten einer ONU-Registrierung dient und der eine Größe eines stillen Fensters umfasst, das für die ONU-Registrierung erforderlich ist, und Bestimmen einer ONU-Registrierungsstartzeit basierend auf der Größe des stillen Fensters, das für die ONU-Registrierung erforderlich ist, die in dem ONU-Registrierungsbefehl enthalten ist;
vorübergehendes Anhalten, durch die Cloud-Steuerung basierend auf der ONU-Registrierungsstartzeit, des Zuweisens einer Bandbreitenressource an die Vorrichtung des Benutzergeräts; und
Anweisen, durch die Cloud-Steuerung basierend auf der ONU-Registrierungsstartzeit, des OLT, die ONU-Registrierung abzuschließen.

7. Netzwerkseitige Vorrichtung, wobei die netzwerkseitige Vorrichtung umfasst:
einen Transceiver (900), der dazu konfiguriert ist, eine von einem OLT gesendete Registrierungsanforderungsnachricht zu empfangen, wobei die Registrierungsanforderungsnachricht eine Größe eines für die ONU-Registrierung erforderlichen stillen Fensters umfasst; und
eine Steuerung (902), die dazu konfiguriert ist, basierend auf der Größe des für die ONU-Registrierung erforderlichen stillen Fensters zu bestimmen, ob dem OLT das Durchführen der ONU-Registrierung gestattet werden soll, und ferner dazu konfiguriert ist, basierend auf der Registrierungsanforderungsnachricht das Zuweisen einer Bandbreitenressource an das Benutzergerät vorübergehend anzuhalten, wenn bestimmt wird, dass dem OLT das Durchführen der ONU-Registrierung gestattet wird.

8. Netzwerkseitige Vorrichtung nach Anspruch 7, wobei die Steuerung ferner dazu konfiguriert ist, eine ONU-Registrierungsstartzeit basierend auf der Größe des für die ONU-Registrierung erforderlichen stillen Fensters zu bestimmen; und
der Transceiver ferner dazu konfiguriert ist, die bestimmte ONU-Registrierungsstartzeit an das OLT zu senden.

9. Netzwerkseitige Vorrichtung nach Anspruch 7, wobei der Transceiver ferner dazu konfiguriert ist, einen durch eine BBU bestimmten ONU-Registrierungsantwort-Identifikator an das OLT zu senden, wobei der ONU-Registrierungsantwort-Identifikator dazu verwendet wird, zu identifizieren, ob das OLT die ONU-Registrierung durchführen kann, nachdem das OLT eine ONU-Registrierungsantwortnachricht empfängt.

10. Netzwerkseitige Vorrichtung, wobei die netzwerkseitige Vorrichtung umfasst:
einen Transceiver, der dazu konfiguriert ist: eine Registrierungsanforderungsnachricht einer optischen Netzwerkeinheit, ONU, an eine Basisbandeinheit, BBU, zu senden, wobei die Registrierungsanforderungsnachricht eine Größe eines für die ONU-Registrierung erforderlichen stillen Fensters umfasst, und eine Antwortnachricht von der BBU zu empfangen;
den Transceiver, der dazu konfiguriert ist, Subframe-Konfigurationsinformationen zu empfangen, die von einer Basisbandeinheit BBU gesendet werden; und
eine Steuerung, die dazu konfiguriert ist: basierend auf den empfangenen Subframe-Konfigurationsinformationen einen Zeitschlitz zu berechnen, der für die Registrierung der optischen Netzwerkeinheit, ONU, verwendet wird, und die ONU-Registrierung basierend auf dem berechneten Zeitschlitz zu starten.

11. Netzwerkseitige Vorrichtung nach Anspruch 10, wobei die Steuerung insbesondere dazu konfiguriert ist: einen Zeitschlitz zu berechnen, der den Konfigurationsinformationen eines Downlink-Subframes entspricht und der in den Subframe-Konfigurationsinformationen enthalten ist, und den berechneten Zeitschlitz als den für die ONU-Registrierung verwendeten Zeitschlitz auszuwählen.

12. Datenkommunikationssystem, wobei das System eine Basisbandeinheit BBU, eine entfernte Funkeinheit RRU, ein optisches Leitungsendgerät OLT, das mit der BBU verbunden ist, und eine optische Netzwerkeinheit ONU, die mit der RRU verbunden ist, umfasst; das OLT mit jeder ONU unter Verwendung eines optischen Verteilungsnetzwerks ODN verbunden ist; und das OLT die netzwerkseitige Vorrichtung nach einem der Ansprüche 10 bis 11 umfasst, und die BBU die netzwerkseitige Vorrichtung nach einem der Ansprüche 7 bis 9 umfasst.

## Revendications

1. Procédé d'enregistrement, appliqué sur un dispositif côté réseau dans un système de porteuse mobile, le dispositif côté réseau comprenant une unité de bande de base, BBU, et un terminal de ligne optique, OLT, connecté à la BBU, et le procédé comprenant :
la réception (S202), par la BBU, d'un message de demande d'enregistrement envoyé par l'OLT, dans lequel le message de demande d'enregistrement comprend une taille d'une fenêtre silencieuse requise pour un enregistrement d'ONU ;
la détermination, sur la base de la taille de la fenêtre silencieuse requise pour l'enregistrement d'ONU, s'il convient, ou non, de permettre à l'OLT de réaliser l'enregistrement d'ONU ;
l'arrêt temporaire (S204), par la BBU sur la base du message de demande d'enregistrement, de l'attribution d'une ressource de largeur de bande à un dispositif d'équipement utilisateur lors de la détermination qu'il convient de permettre à l'OLT de réaliser l'enregistrement d'ONU ; et
l'instruction (S206), par la BBU, à l'OLT, d'achever l'enregistrement d'ONU

2. Procédé d'enregistrement selon la revendication 1, le procédé comprenant en outre :
la détermination, par la BBU, d'un temps de commencement d'enregistrement d'ONU sur la base de la taille de la fenêtre silencieuse requise pour l'enregistrement d'ONU ;
et
l'envoi, par la BBU, du temps de commencement d'enregistrement d'ONU déterminé à l'OLT.

3. Procédé d'enregistrement selon la revendication 1, le procédé comprenant en outre :
l'envoi, par la BBU, à l'OLT, d'un identifiant de réponse d'enregistrement d'ONU déterminé par la BBU, dans lequel l'identifiant de réponse d'enregistrement d'ONU est utilisé pour identifier si l'OLT peut, ou non, réaliser l'enregistrement d'ONU après que l'OLT a reçu un message de réponse d'enregistrement d'ONU

4. Procédé d'enregistrement, appliqué sur un système de porteuse mobile, le procédé comprenant :
l'envoi, par un terminal de ligne optique, OLT, d'un message de demande d'enregistrement d'unité de réseau optique, ONU, à une unité de bande de base, BBU, dans lequel le message de demande d'enregistrement comprend une taille d'une fenêtre silencieuse requise pour un enregistrement d'ONU ;
la réception, par un terminal de ligne optique, OLT, d'informations de configuration de sous-trame envoyées par une unité de bande de base, BBU ;
le calcul, par l'OLT, sur la base des informations de configuration de sous-trame reçues, d'un créneau de temps utilisé pour l'enregistrement d'unité de réseau optique, ONU; et
le commencement, par l'OLT, de l'enregistrement d'ONU sur la base du créneau de temps calculé.

5. Procédé d'enregistrement selon la revendication 4, dans lequel le calcul, par l'OLT, sur la base des informations de configuration de sous-trame reçues, d'un créneau de temps utilisé pour l'enregistrement d'ONU comprend spécifiquement :
le calcul, par l'OLT, d'un créneau de temps qui correspond à des informations de configuration d'une sous-trame de liaison descendante et qui est dans les informations de configuration de sous-trame ; et
la sélection, par l'OLT, du créneau de temps calculé en tant que créneau de temps utilisé pour l'enregistrement d'ONU

6. Procédé d'enregistrement, appliqué sur un dispositif côté réseau dans un système de porteuse mobile, le dispositif côté réseau comprenant un contrôleur en nuage, une unité de bande de base, BBU, et un terminal de ligne optique, OLT, connecté à la BBU, et le procédé comprenant :
la réception, par le contrôleur en nuage, d'une instruction qui est pour commencer un enregistrement d'ONU et qui comprend une taille d'une fenêtre silencieuse requise pour l'enregistrement d'ONU, et la détermination d'un temps de commencement d'enregistrement d'ONU sur la base de la taille de la fenêtre silencieuse requise pour l'enregistrement d'ONU qui est dans l'instruction d'enregistrement d'ONU ;
l'arrêt temporaire, par le contrôleur en nuage, sur la base du temps de commencement d'enregistrement d'ONU, de l'attribution d'une ressource de largeur de bande à un dispositif d'équipement utilisateur ; et
l'instruction, par le contrôleur en nuage, sur la base du temps de commencement d'enregistrement d'ONU, à l'OLT, d'achever l'enregistrement d'ONU

7. Dispositif côté réseau, le dispositif côté réseau comprenant :
un transmetteur-récepteur (900), configuré pour recevoir un message de demande d'enregistrement envoyé par un OLT, dans lequel le message de demande d'enregistrement comprend une taille d'une fenêtre silencieuse requise pour un enregistrement d'ONU ; et
un contrôleur (902), configuré pour déterminer, sur la base de la taille de la fenêtre silencieuse requise pour un enregistrement d'ONU, s'il convient ou non de permettre à l'OLT de réaliser l'enregistrement d'ONU, et en outre configuré pour arrêter temporairement, sur la base du message de demande d'enregistrement, l'attribution d'une ressource de largeur de bande à un dispositif d'équipement utilisateur lors de la détermination qu'il convient de permettre à l'OLT de réaliser l'enregistrement d'ONU

8. Dispositif côté réseau selon la revendication 7, dans lequel le contrôleur est en outre configuré pour déterminer un temps de commencement d'enregistrement d'ONU sur la base de la taille de la fenêtre silencieuse requise pour l'enregistrement d'ONU ; et le transmetteur-récepteur est en outre configuré pour envoyer le temps de commencement d'enregistrement d'ONU déterminé à l'OLT.

9. Dispositif côté réseau selon la revendication 7, dans lequel le transmetteur-récepteur est en outre configuré pour envoyer, à l'OLT, un identifiant de réponse d'enregistrement d'ONU déterminé par une BBU, dans lequel l'identifiant de réponse d'enregistrement d'ONU est utilisé pour identifier si l'OLT peut ou non réaliser l'enregistrement d'ONU après que l'OLT a reçu un message de réponse d'enregistrement d'ONU

10. Dispositif côté réseau, le dispositif côté réseau comprenant :
un transmetteur-récepteur, configuré pour : envoyer un message de demande d'enregistrement d'unité de réseau optique, ONU, à une unité de bande de base, BBU, dans lequel le message de demande d'enregistrement comprend une taille d'une fenêtre silencieuse requise pour l'enregistrement d'ONU, et recevoir un message de réponse à partir de la BBU ;
le transmetteur-récepteur, configuré pour recevoir des informations de configuration de sous-trame envoyées par une unité de bande de base, BBU ; et
un contrôleur, configuré pour : calculer, sur la base des informations de configuration de sous-trame reçues, un créneau de temps utilisé pour l'enregistrement d'unité de réseau optique, ONU, et commencer l'enregistrement d'ONU sur la base du créneau de temps calculé.

11. Dispositif côté réseau selon la revendication 10, dans lequel le contrôleur est spécifiquement configuré pour : calculer un créneau de temps qui correspond à des informations de configuration d'une sous-trame de liaison descendante et qui est dans les informations de configuration de sous-trame, et sélectionner le créneau de temps calculé en tant que créneau de temps utilisé pour l'enregistrement d'ONU

12. Système de communication de données, le système comprenant une unité de bande de base, BBU, une unité radio à distance, RRU, un terminal de ligne optique, OLT, connecté à la BBU, et une unité de réseau optique, ONU, connectée à la RRU ; l'OLT est connecté à chaque ONU en utilisant un réseau de distribution optique, ODN ; et l'OLT comprend le dispositif côté réseau selon l'une quelconque des revendications 10 et 11, et la BBU comprend le dispositif côté réseau selon l'une quelconque des revendications 7 à 9.
